Europäisches Patentamt

European Patent Office

Office européen des brevets

(11) Veröffentlichungsnummer: **0 007 997**
**A1**

(12) # EUROPÄISCHE PATENTANMELDUNG

(21) Anmeldenummer: 79102233.8

(22) Anmeldetag: 03.07.79

(51) Int. Cl.³: **C 03 B 9/02,** C 03 B 9/08

(30) Priorität: 07.07.78 DE 2829988

(43) Veröffentlichungstag der Anmeldung: 20.02.80
Patentblatt 80/4

(84) Benannte Vertragsstaaten: **AT BE FR GB IT SE**

(71) Anmelder: **Maschinenfabrik Reinhausen Gebrüder Scheubeck GmbH & Co. KG., Falkensteinstrasse 8, D-8400 Regensburg (DE)**

(72) Erfinder: **Fend, Fritz. M., Thurmayerstrasse 11, D-8400 Regensburg (DE)**

(54) **Gerät zum Blasen von Glaskörpern.**

(57) Gerät (1) zum Blasen von Glaskörpern (11) aus flüssigem Glas mit Hilfe einer Pfeife (7).

Der Blaseingang der Pfeife ist mittels eines Kupplungsstückes (6) an eine Druckluftquelle (18) anschließbar, wobei zwischen Druckluftquelle (18) und Kupplungsstück (6) eine auf Steuerdruck ansprechende Steuereinrichtung (17) für die Druckluft vorgesehen ist. Der mit dem Steuerdruck beaufschlagbare Eingang dieser Steuereinrichtung (17) ist mit wenigstens einem Mundstück (12) zum Erzeugen des Steuerdruckes versehen.

- 1 -

## Gerät zum Blasen von Glaskörpern

Die Erfindung betrifft ein Gerät zum Blasen von Glaskörpern, z.B. Flaschen, Vasen, Krügen, Gläsern usw.
mit Hilfe einer Pfeife.

Hand- bzw. mundgeblasene Glasgegenstände erfreuen sich
wegen ihrer hohen Qualität und ihres individuellen
Dessins nach wie vor großer Beliebtheit. Allerdings
ist das Blasen von Glasgegenständen mit dem Mund mit
erheblichen körperlichen Belastungen verbunden, die
zu erheblichen körperlichen Schäden bei den Glasbläsern
führen können. Bisher wird beim Blasen von Glaskörpern
mit dem Mund so verfahren, daß ein als "Pfeife" bezeichnetes Blasrohr mit einem Ende (Arbeitsende) in eine Glasschmelze eingetaucht wird, so daß eine bestimmte Menge
an flüssigem Glas an diesem Arbeitsende der Pfeife bzw.
Glasmacherpfeife haften bleibt. Durch Blasen mit dem Mund
an dem dem Arbeitsende entfernt liegenden anderen Ende der
Pfeife (Mundstück) wird dann aus dem am Arbeitsende anhaftenden flüssigen Glas zunächst ein kleiner Kolben erzeugt, und
zwar unter ständigem Drehen der hierbei schräg nach oben
gehaltenen Pfeife. Die Form des beim Blasen erzeugten Glaskolbens muß dabei durch Absetzen der Glaspfeife vom Mund
und durch Zurückführen des Arbeitsendes in den Sichtbereich
des Glasbläsers ständig kontrolliert werden, wobei dann
die Möglichkeit besteht, mit entsprechenden Werkzeugen den
erzeugten Kolben aus noch flüssigem bzw. zähflüssigem Glas
von außen her durch Druck in der gewünschten Weise zu ver-

0007997

formen. Schon allein das Halten der Pfeife beim Blasen erfordert erhebliche körperliche Anstrengungen bei einer erheblichen Belastung vor allem der Armmuskulatur des Glasbläsers. Ein weiterer Nachteil ist, daß der Glasbläser, insbesondere am Beginn des Blasvorgangs einen erheblichen Luftdruck mit seiner Lunge aufbringen und dieser Luftdruck über einen erheblichen Zeitraum aufrechterhalten werden muß. Weiterhin ist beim Blasen erforderlich, daß ständig Luft aus der Lunge des Glasbläsers über den Luftkanal der Pfeife in den Hohlraum des geformten Glashohlkörpers bzw. Glaskolbens gefördert wird, wodurch es dem Glasbläser nicht möglich ist, während des Blasvorgangs zu atmen. Hierdurch wird die Lunge des Glasbläsers stark beansprucht, was zu erheblichen Lungenschäden (Blählunge) führen kann. Die eigentliche feine Steuerung des Luftdruckes, die zum Erreichen einer bestimmten Form für den hergestellten Glaskolben notwendig ist, wird durch die Backenmuskulatur des Glasbläsers durchgeführt, während die Förderung der Luft sowie der "Grunddruck" der Luft, dem die durch die Backenmuskulatur erzeugten Druckänderungen zur Steuerung der Formgebung des Glaskolbens überlagert sind, ausschließlich durch die Lunge erzeugt werden müssen.

Beim Herstellen insbesondere größerer geblasener Glaskörper sind insgesamt drei verschiedene Glasbläser beteiligt, wobei der erste Glasbläser aus dem am Arbeitsende der Pfeife befindlichen flüssigen Glas zunächst als Vorprodukt einen Kolben mit verhältnismäßig kleinem Durchmesser herstellt. Im Anschluß daran wird die mit diesem kleinen Kolben versehene Pfeife gegebenenfalls nach erneutem Erwärmen bzw. Verflüssigen des Glases von einem zweiten Glasbläser erneut in die Glasschmelze eingetaucht, um auf den bereits hergestellten kleinen Kolben weiteres flüssiges Glas aufzubringen. Dann wird aus diesem kleinen Kolben durch Blasen ein größerer Kolben hergestellt. Im Anschluß daran geht die Pfeife an einen dritten Glasbläser, der nach erneutem Verflüssigen des Glases an der Pfeife das Arbeitsende dieser Pfeife in eine Form einbringt, die Form schließt und dann durch Blasen am Mundstück bei gleichzeitigem Drehen der Pfeife um ihre Längsachse den Glaskolben soweit aufbläst, daß er mit seiner Außenfläche gegen die Wandung der Form anliegt.

Da an ein und derselben Pfeife mehrere Glasbläser arbeiten, besteht hier auch in hohem Maße die Gefahr von Ansteckungen bei Infektionskrankheiten, z.B. bei Grippe und so weiter, so daß bei dem bisherigen Verfahren zum Blasen von Glaskörpern erhebliche Ausfallzeiten auch durch Infektionskrankheiten unvermeidlich sind.

Weiterhin bedeutet das bisherige Verfahren auch eine erhebliche nervliche sowie psychische Belastung für die Glasbläser, da die Arbeitsgänge so schnell durchgeführt werden müssen, daß ein Erstarren des flüssigen Glases zumindest während eines Arbeitsganges nicht auftritt. Hinzu kommt noch, daß mundgeblasene Glasgegenstände in der Regel in Akkordarbeit hergestellt werden, so daß sich auch hierdurch, bedingt durch die Zusammenarbeit jedes Glasbläsers mit anderen Glasbläsern, erhebliche nervliche und psychische Belastungen ergeben.

Aufgabe der vorliegenden Erfindung ist es, ein Gerät aufzuzeigen, mit dem das Blasen von Glaskörpern unter Beibehaltung des hohen Qualitätsstandards, wie er nur bei mundgeblasenen Glaskörpern erreicht werden kann, wesentlich vereinfacht wird und mit welchem nicht nur die Arbeitsumwelt humanisiert, sondern auch vor allem gesundheitliche Schäden völlig ausgeschlossen werden.

Zur Lösung dieser Aufgabe ist ein Gerät zum Blasen von Glaskörpern mit Hilfe einer Pfeife erfindungsgemäß gekennzeichnet durch eine Druckluftquelle, die über ein lösbares Kupplungsstück mit einem Ende der Pfeife verbunden werden kann, sowie durch eine auf einen Steuerdruck ansprechende Steuereinrichtung zwischen der Druckluftquelle und dem Kupplungsstück, wobei der mit dem Steuerdruck beaufschlagbare Eingang der Steuereinrichtung mit wenigstens einem Mundstück
in Verbindung steht.

Bei dem erfindungsgemäßen Gerät wird die Arbeitsluft sowie der Arbeitsdruck für die Pfeife von der Druckluftquelle geliefert, während die Steuerung des Flusses dieser Arbeitsluft sowie des Druckes der Arbeitsluft durch die Steuereinrichtung mit Hilfe eines wesentlich geringeren Steuerdrucks erfolgen kann. Bei einer Ausführungsform der Erfindung beträgt das Verhältnis Steuerdruck/Arbeitsdruck 1/5. Die Erfindung besitzt den Vorteil, daß der Glasbläser wie bisher durch Blasen in ein Mundstück die Formgebung des hergestellten Glaskörpers beeinflussen und somit seine bisherigen, durch lange Erfahrungen erworbenen Fertigkeiten voll ausnutzen kann, wobei allerdings die Notwendigkeit entfällt, große Mengen von Luft unter hohem Druck aus der Lunge in die Pfeife zu fördern. Die Steuerung der von der Druckluftquelle gelieferten Arbeitsluft erfolgt durch einen Steuerdruck, der ausschließlich durch die Mund- bzw. Backenmuskulatur des Glasbläsers erzeugt werden kann, so daß der Glasbläser durchaus die Möglichkeit hat, während des Arbeitsvorganges durch die Nase zu atmen.

Die die Arbeitsluft aus der Druckluftquelle steuernde Steuereinrichtung weist dabei eine solche Charakteristik auf, daß diese Steuereinrichtung bei steigendem Steuerdruck am Steuereingang den Durchfluß für die Arbeitsluft zunehmend öffnet, während bei fehlendem Steuerdruck der Fluß der Arbeitsluft vollständig unterbrochen ist.

Bei einer Ausführungsform der Erfindung besteht das Gerät aus einem Rahmen, auf welchem die Pfeife für den Blasvorgang etwa waagerecht oder aber in einem spitzen Winkel gegenüber der Waagerechten geneigt angeordnet werden kann, wobei das Mundstück im Bereich des Arbeitsendes der Pfeife am Rahmen angeordnet ist. Hierdurch kann der Glasbläser die Ausbildung und Formgebung des Glaskolbens beim Blasen ständig beobachten, d.h. es ist nicht mehr notwendig, den Blasvorgang für die Überprüfung der Form des Glaskolbens zu unterbrechen. Hierdurch läßt sich die für die einzelnen Arbeitsgänge tatsächlich erforderliche Arbeitszeit im Verhältnis zur Abkühlzeit des Glases wesentlich verkürzen, so daß die Arbeitsvorgänge mit weniger Hektik durchgeführt werden können. Durch die Ablage der Pfeife auf einem Rahmen während des Blasvorganges entfällt auch die bisherige hohe körperliche Belastung beim Blasen bzw. beim Halten der Pfeife.

Die wesentlichen Vorteile der Erfindung bestehen darin, daß der hohe Arbeitsdruck sowie die große Menge an Arbeitsluft nicht mehr durch die Lunge erzeugt werden müssen, und daß der Glasbläser vor allem auch beim Blasen die Möglichkeit hat, normal zu atmen. Hierdurch werden gesundheitliche Schädigungen des Atmungssystems und vor allem der Lunge vermieden.

Der Glasbläser ist in der Lage, die Formgebung des hergestellten Glaskörper in der üblichen Weise (durch mit der Backenmuskulatur erzeugte Druckveränderungen) zu steuern, ohne daß eine Förderung der Arbeitsluft durch die Lunge erforderlich ist. Außerdem erfolgt die Steuerung mit den Druckänderungen auf einem niedrigeren Druckniveau.

Da die tatsächliche Arbeitszeit für einen Arbeitsvorgang im Vergleich zu der Zeit, in der das Glas erstarrt, wesentlich verkürzt werden kann, werden auch nervliche bzw. psychische Belastungen vermieden. Weiterhin kann das Mundstück bei dem erfindungsgemäßen Gerät so angeordnet werden, daß während des Blasvorgangs ständig bequem die Formgebung des geblasenen Glaskörpers beobachtet und daher auch bei Abweichungen von der gewünschten Formgebung sofort eingegriffen werden kann. Hierdurch wird die Qualität der hergestellten Glaserzeugnisse wesentlich gesteigert.

Weiterhin ist es bei dem erfindungsgemäßen Gerät möglich, mehrere Mundstücke vorzusehen, wobei dann jeder Glasbläser

0007997

sein eigenes Mundstück bekommt, wodurch Infektionen vollständig ausgeschlossen werden. Die Mundstücke können so am Gerät befestigt werden, daß sie in der Höhe einstellbar sind, so daß jeder Glasbläser sein Mundstück entsprechend seiner Körpergröße in die für ihn günstigste Lage bringen kann.

Weiterbildungen der Erfindung sind in den Unteransprüchen beschrieben.

Die Erfindung wird im folgenden anhand der Figuren an einem Ausführungsbeispiel näher erläutert. Es zeigen:

Figur 1 in perspektivischer Darstellung eine Ausführungsform des erfindungsgemäßen Gerätes zusammen mit einer im Gerät angeordneten Pfeife zum Blasen von Glaskörpern;

Figur 2 ein Blockschaltbild des Gerätes gemäß Figur 1;

Figur 3 in Detaildarstellung im Schnitt das Kupplungsstück zur Verwendung bei dem Gerät gemäß Figur 1;

Figur 4 einen Querschnitt durch den Querträger des Gerätes gemäß Figur 1 sowie durch die auf der Ablage angeordnete Pfeife.

Das in den Figuren dargestellte Gerät besteht aus einem Rahmen 1, der von einem Querträger 2 sowie zwei am Querträger befestigten und nach unten vom Querträger wegstehenden Füßen 3 gebildet ist. Der Querträger 2 ist bei der dargestellten Ausführungsform ein U-Profileisen mit zwei senkrecht verlaufenden Schenkeln 4 und einer diese Schenkel miteinander verbindenden, waagerecht verlaufenden Jochfläche 5. Die Schenkel 4 ragen mit ihren freien Kanten nach unten, so daß die Jochfläche 5 mit ihrer, den freien Kanten der Schenkel 4 abgewandten Oberseite eine ebene Fläche des Querrahmens 2 bildet. An einem Ende des Querrahmens 2 ist an der Oberseite der Jochfläche 5 ein Kupplungsstück 6 für die Pfeife 7 befestigt, während im Bereich des anderen

0007997

Endes des Querträgers 2 ebenfalls an der Oberseite der Jochfläche 5 eine von zwei Rollen 8 gebildete Ablage für die Pfeife 7 vorgesehen ist.

Das Kupplungsstück 6 sowie die beiden Rollen 8 sind jeweils um waagerechte, sich in Längsrichtung des Querträgers 2 erstreckende Achsen drehbar an diesem Querträger befestigt, wobei zur Halterung des Kupplungsstückes 6 ein Lagerelement 9 und zur Halterung der Rollen 8 ein Lagerelement 10 dient und diese Lagerelemente 9 bzw. 10 in geeigneter Weise mit dem Querträger 2 verbunden sind. Die Rollen 8 bzw. deren Drehachsen weisen einen solchen Abstand voneinander auf, daß die von oben auf die Rollen 8 aufgelegte Pfeife 7 zwischen den beiden Rollen 8, jedoch oberhalb der Drehachse dieser Rollen liegt, so daß die Pfeife 7 von den Rollen 8, die bei dem dargestellten Ausführungsbeispiel gleichen Durchmesser aufweisen, seitlich geführt wird. Die mit dem Kupplungsstück 6 verbundene und auf den Rollen 8 aufliegende Pfeife 7 kann von Hand um die Pfeifenlängsachse gedreht werden, um so die Form des am Arbeitsende der Pfeife 7 sich ausbildenden Kolbens 11 aus flüssigem Glas zu beeinflussen.

Die Achse der mit dem Kupplungsstück 6 verbundenen Pfeife 7 liegt bei der dargestellten Ausführungsform in etwa horizontal. Es ist jedoch auch möglich, die Anordnung so zu treffen, daß diese Achse gegenüber der Horizontalen geneigt ist. In diesem Fall ist dann zumindest auch die Drehachse des Kupplungsstückes 6 gegenüber der Horizontalen entsprechend geneigt. Die Anordnung des Kupplungsstückes 6 sowie die Länge des Querträgers 2 sind weiterhin so gewählt, daß die Pfeife 7 mit ihrem Arbeitsende, an welchem der Glaskolben 11 erzeugt wird, über das dem Kupplungsstück 6 abgewandte Ende des Querträgers 2 vorsteht. An diesem Ende des Querträgers 2 sind bei der dargestellten Ausführungsform zwei Mundstücke 12 vorgesehen, die im einfachsten Fall jeweils von einem Röhrchen aus Metall oder Kunststoff gebildet sind, und die an einem seitlich vom Querträger 2 wegstehenden Träger 13 befestigt sind. Die Mundstücke 12, die über die Unterseite des Trägers 13 vorstehen und am Träger 13 vorzugsweise so befestigt sind, daß die oberen freien Enden der Mundstücke 12 in der Höhe eingestellt werden können, sind mit ihren unteren Enden über Schläuche 14 mit den beiden Eingängen eines pneumatischen ODER-Gatters 15 verbunden, dessen Ausgang über eine Leitung bzw. über einen Schlauch 16 mit dem Steuereingang eines durch Druck betätigbaren Ventils 17 verbunden ist. Unter "ODER-Gatter" wird hier eine Einrichtung verstanden, die an ihrem Ausgang einen Steuerdruck für das Ventil 17 liefert, wenn wenigstens an einem der beiden Mundstücke 12 durch Hineinblasen von Luft ein Druck erzeugt wird.

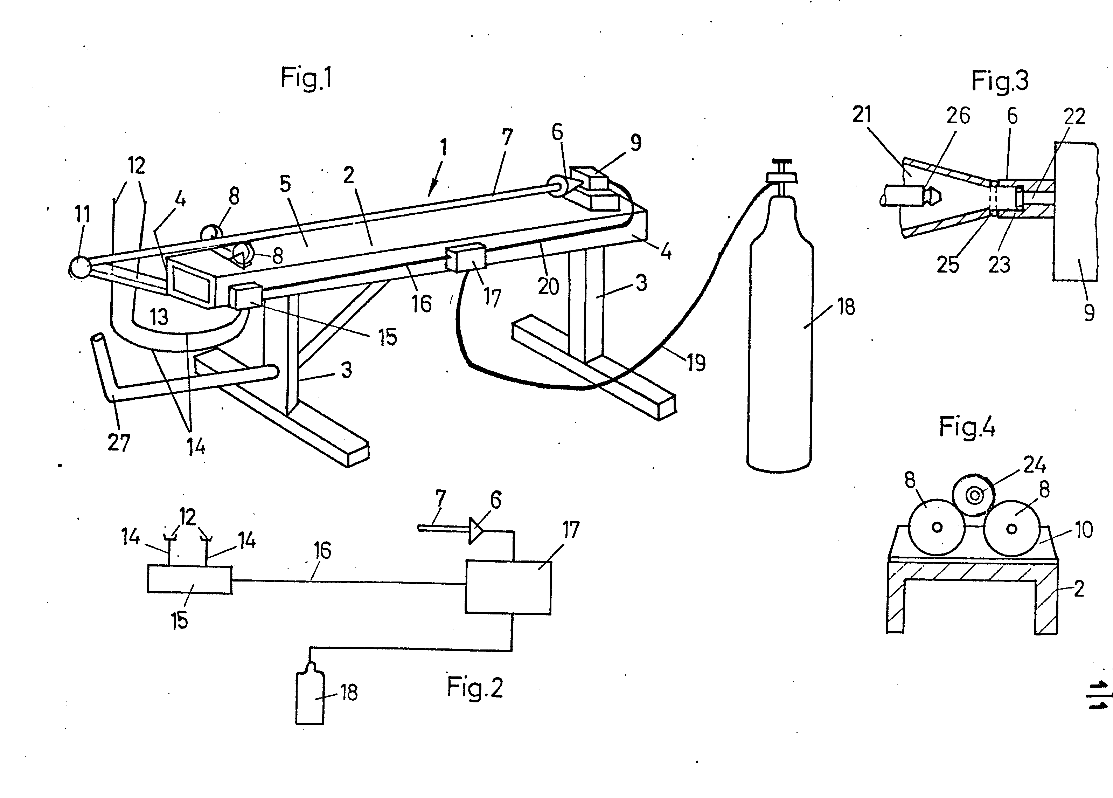

Das Steuerventil 17 liegt in der Verbindung zwischen einer Druckluftquelle 18, die in der Fig. 1 als Preßluftflasche dargestellt ist, und dem Kupplungsstück 6. Zu diesem Zweck ist die Druckluftquelle 18 über einen Schlauch 19 mit dem Eingang des Steuerventils 17 verbunden, während der Ausgang des Steuerventils 17 über eine Leitung oder über einen Schlauch 20 an das Kupplungsstück 6 angeschlossen ist.

Es ist selbstverständlich auch möglich, anstelle der Druckluftflasche eine andere Druckluftquelle, z.B. einen Kompressor usw. zu verwenden, wobei es zweckmäßig ist, dem Steuerventil 17 eine Ventileinrichtung vorzuschalten, mit der der Druck der Druckluftquelle 18 auf den gewünschten Arbeitsdruck reduziert bzw. mit der ein konstanter Arbeitsdruck erzeugt wird.

Die Charakteristik des Steuerventils 17 ist so, daß bei fehlendem Steuerdruck in der Leitung 16 der Luftfluß von dem Schlauch 19 durch das Steuerventil 17 in die Leitung 20 vollständig unterbrochen ist, während dieser Luftfluß von der Druckluftquelle 18 an das Kupplungsstück 6 mit steigendem Steuerdruck in der Leitung 16 zunimmt. Bei einer bevorzugten Ausführungsform ist der in der Leitung 16 und damit auch an den Mundstücken 12 erzeugte Steuerdruck etwa 1/5

0007997

des Arbeitsdruckes in der Leitung 20.

Das Kupplungsstück 6 weist, wie insbesondere der Figur 3 zu entnehmen ist, eine Öffnung 21 zum Einführen des einen Endes der Pfeife 7 auf, wobei diese Einführöffnung so ausgebildet ist, daß sie sich zu ihrem freien Ende hin kegel- bzw. trichterförmig erweitert, wodurch das Einführen der Pfeife 7 wesentlich erleichtert wird. Das innere Ende der Einführöffnung 21 geht in einen Kanal 22 über, der über geeignete, nicht näher dargestellte Mittel, die ein Drehen des Kupplungsstückes 6 um die waagerechte Achse ermöglichen, mit der Leitung 20 verbunden ist. Am Ende des Kanales 22 ist innerhalb der Einführöffnung 21 eine ringförmige Dichtung 23 angeordnet, gegen welche das in die Einführöffnung 21 eingeführte Ende der Pfeife 7 so anliegt, daß eine nach außen hin dichte Verbindung zwischen dem Kanal 22 und dem Luftkanal 24 hergestellt wird, welch letzterer sich von dem mit dem Kupplungsstück 6 verbundenen Ende zu dem Arbeitsende durch die Pfeife 7 hindurcherstreckt. Zum Verriegeln der Pfeife 7 im Kupplungsstück 6 ist an diesem Kupplungsstück weiterhin ein federndes Rastelement 25 vorgesehen, welches bei in die Einführöffnung 21 eingeführter Pfeife 7 in eine Ringnut 26 der Pfeife 7 einrastet. Bei der dargestellten Ausführungsform besteht das Rastelement 25 aus einem Bügel aus Federdraht, der (Bügel) mit seinen beiden Schenkeln in durchgehende Nuten in der die Einführöffnung 21 begrenzenden Wandung derart angeordnet ist, daß die Schenkel dieses Bügels in einem Teilbereich in das Innere der Einführöffnung 21 hineinragen und dadurch mit der Ringnut 26 bei vollständig in das Kupplungsstück 6 eingeführter Pfeife 7 einrasten können.

Die Arbeitsweise des in den Figuren dargestellten Gerätes gemäß der vorliegenden Erfindung läßt sich, wie folgt, beschreiben:

Zum Blasen eines Gegenstandes aus Glas wird die Pfeife 7 zunächst mit ihrem Arbeitsende in die Glasschmelze eingetaucht und dabei so bewegt, daß eine erforderliche Menge an flüssigem Glas am Arbeitsende der Pfeife 7 haften bleibt. Nun wird die Pfeife 7 mit ihrem anderen Ende in das Kupplungsstück 6 eingeschoben und dabei gleichzeitig auf die Rollen 8 aufgelegt. Durch Blasen in eines der Mundstücke 12 wird über den hierbei erzeugten Steuerdruck in der Leitung 16 das Steuerventil 17 betätigt, wodurch in Abhängigkeit vom Steuerdruck in der Leitung 16 ein Luftfluß aus der Druckluftquelle 18 an das Kupplungsstück 6 und von diesem durch den Luftkanal 24 an das Arbeitsende der Pfeife 7 erzeugt wird. Hierdurch entsteht aus dem am Arbeitsende der Pfeife 7 vorhandenen Glasbatzen durch Blasen ein Hohlkörper, dessen Formgebung und Größe durch entsprechendes Drehen der Pfeife 7 um die waagerechte Achse sowie durch entsprechendes Modulieren des Steuerdruckes am Mundstück 12 bestimmt werden kann. Selbstverständlich ist es dabei auch möglich, die Formgebung des geblasenen Glaskörpers zusätzlich noch von außen her durch geeignete Werkzeuge zu beeinflussen, wie sie bisher schon beim Glasblasen Verwendung finden. Allerdings hat das erfindungsgemäße Gerät den Vorteil, daß die Mundstücke 12, mit denen über das Steuerventil 17 der Fluß der Arbeitsluft aus der Druckquelle 18 an das Arbeitsende der Pfeife 7 beeinflußt werden kann, in unmittelbarer Nähe des Arbeitsendes der auf dem Rahmen 7 liegenden Pfeife angeordnet sind, so daß die Beeinflussung der Form des geblasenen Glaskörpers ohne Unterbrechung des Blasvorgangs und vor allem auch ohne Absetzen der Pfeife 7 möglich ist, wodurch der Arbeitsvorgang wesentlich beschleunigt und vereinfacht wird. Sobald der geblasene Glaskörper die gewünschte Form erreicht hat, kann er durch aus dem Rohr 27 austretende Kühlluft abgekühlt werden, um ein Erstarren des flüssigen Glases zu erreichen. Das Rohr 27, dessen freies Ende unterhalb des Arbeitsendes der Pfeife 7 angeordnet und nach oben gerichtet ist, ist zu diesem Zweck mit einer geeigenten, nicht näher dargestellten Quelle für Kühlluft verbunden. Es ist selbstverständlich möglich, daß die dem Rohr 27 zugeführte Kühlluft aus der gleichen Druckluftquelle stammt, die auch die Arbeitsluft zum Blasen des Glaskörpers bzw. Glaskolbens 11 liefert. Weiterhin ist es bei dem erfindungsgemäßen Gerät auch möglich, daß aus dem Rohr 27 ständig Kühlluft austritt und dadurch bereits beim eigentlichen Blasvorgang bzw. beim Blasen des Glaskörpers 11 eine Kühlwirkung eintritt. Dies ist bei dem erfindungsgemäßen Gerät deswegen möglich, weil der gesamte Arbeitsvorgang so schnell ablaufen kann, daß trotz der ständig aus dem Rohr 27 austretenden Kühlluft der Blasvorgang beendet werden kann, bevor das Glas am Arbeitsende der Pfeife 7 erstarrt ist.

Die Erfindung wurde voranstehend an einem Ausführungsbeispiel beschrieben. Es versteht sich, daß Abwandlungen sowie Änderungen möglich sind, ohne daß dadurch der der Erfindung zugrundeliegende Gedanke verlassen wird.

- 1 -

0007997

Patentansprüche:

1. Gerät zum Blasen von Glaskörpern mit Hilfe einer Pfeife, gekennzeichnet durch eine Druckluftquelle (18), die über ein lösbares Kupplungsstück (6) mit einem Ende der Pfeife (7) verbunden werden kann, sowie durch eine auf einen Steuerdruck ansprechende Steuereinrichtung (17) zwischen der Druckluftquelle (18) und dem Kupplungsstück (6), wobei der mit dem Steuerdruck beaufschlagbare Eingang der Steuereinrichtung (17) mit wenigstens einem Mundstück (12) in Verbindung steht.

2. Gerät nach Anspruch 1, dadurch gekennzeichnet, daß die durch die Steuereinrichtung (17) fließende Luftmenge (Arbeitsluftmenge) mit zunehmendem Steuerdruck ansteigt.

3. Gerät nach Anspruch 1 oder 2, dadurch gekennzeichnet, daß der Steuerdruck etwa 1/5 des Druckes der von der Steuereinrichtung (17) an das Kupplungsstück (6) abgegebenen Luft (Arbeitsluft) ist.

4. Gerät nach einem der Ansprüche 1 bis 3, dadurch gekennzeichnet, daß wenigstens zwei Mundstücke (12) vorgesehen sind, die über ein pneumatisches ODER-Gatter mit dem Steuereingang der Steuereinrichtung (17) verbunden sind.

5. Gerät nach einem der Ansprüche 1 bis 4, dadurch gekennzeichnet, daß zwischen der Druckluftquelle (18) und der Steuereinrichtung (17) ein Element zur Druckreduzierung und/oder Druckregelung zwischengeschaltet ist.

6. Gerät nach einem der Ansprüche 1 bis 5, dadurch gekennzeichnet, daß die Steuereinrichtung (17) ein durch den Steuerdruck regelbares Ventil (17) ist.

7. Gerät nach einem der Ansprüche 1 bis 6, dadurch gekennzeichnet, daß das Kupplungsstück (6) eine Einführöffnung (21) aufweist, in welche das eine Ende der Pfeife (7) einführbar ist und welche mit einem mit Arbeitsluft beaufschlagbarem Innenraum (22) des Kupplungsstückes (6) in Verbindung steht, daß in der Einführöffnung (21) eine Dichtung (23) vorgesehen ist, die die Verbindungsstelle zwischen dem Arbeitsluft führenden Innenraum des Kupplungsstückes (6) und dem Luftkanal (24) der Pfeife (7) nach außen hin abdichtet, und daß der Einführöffnung (21) Mittel (25, 26) vorgesehen sind, die das eine Ende der Pfeife (7) lösbar im Kupplungsstück (6) verriegeln.

8. Gerät nach Anspruch 7, dadurch gekennzeichnet, daß die Verriegelungsmittel federnde Rastmittel (25) sind.

9. Gerät nach Anspruch 7 oder 8, dadurch gekennzeichnet, daß die Verriegelungsmittel von wenigstens einem Federelement (25) gebildet sind, welches am Kupplungsstück (6) vorgesehen ist und hinter eine Rastfläche (26) an dem einen Ende der Pfeife (7) einrastet.

10. Gerät nach einem der Ansprüche 1 bis 9, gekennzeichnet durch einen Rahmen (1) mit einem im wesentlichen waagerecht verlaufenden Querträger (2), der an einem Ende eine Auflage (8) für die Pfeife (7) und am anderen Ende das Kupplungsstück (6) trägt.

11. Gerät nach Anspruch 10, dadurch gekennzeichnet, daß die Ablage von zwei im Abstand voneinander angeordneten und jeweils um eine in Längsrichtung des Trägers (2) verlaufende Achse drehbaren Rollen (8) besteht.

12. Gerät nach Anspruch 10 oder 11, dadurch gekennzeichnet, daß das Kupplungsstück (6) um eine waagerechte Achse oder um eine gegenüber der Waagerechten um einen spitzen

0007997

Winkel geneigte Achse am Querträger (2) drehbar gelagert ist.

13. Gerät nach einem der Ansprüche 7 bis 12, dadurch gekennzeichnet, daß sich die Einführöffnung (21) zu ihrem freien Ende hin kegelförmig erweitert.

14. Gerät nach einem der Ansprüche 10 bis 13, dadurch gekennzeichnet, daß das Mundstück (12) im Bereich des die Ablage (8) aufweisenden Endes am Querträger (2) befestigt ist.

15. Gerät nach einem der Ansprüche 10 bis 14, dadurch gekennzeichnet, daß der Querträger (2) eine solche Länge aufweist, daß die im Kupplungsstück (6) befestigte Pfeife (7) mit ihrem Arbeitsende über das dem Kupplungsstück (6) entfernt liegende Ende des Querträgers (2) vorsteht.

16. Gerät nach einem der Ansprüche 10 bis 15, dadurch gekennzeichnet, daß das Mundstück (12) in der Höhe einstellbar am Rahmen (1) befestigt ist.

17. Gerät nach einem der Ansprüche 10 bis 16, dadurch gekennzeichnet, daß am Rahmen (1) unter dem Arbeitsende der Pfeife (7) das offene Ende eines Rohres (27) für Kühlluft mündet.

Fig.1

Fig.2

Fig.3

Fig.4

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - H - T 883 025 (HANGGI) <br> * Das ganze Dokument * | 1,2,5,6 |
| X | US - A - 3 438 396 (JEHN) <br> * Das ganze Dokument * | 1,2,5,6 |
| | DE - A - 1 945 689 (BORSELLINI) <br> * Das ganze Dokument * | 7-9 |
| | DE - C - 28 646 (APPERT) <br> * Das ganze Dokument * | 10,14,15 |
| | US - A - 3 607 204 (GILBERTSON) <br> * Das ganze Dokument * | 10,11,14 |
| | FR - A - 445 741 (CATON) <br> * Das ganze Dokument * | 10,11,14,15 |
| | DE - C - 290 988 (EMPIRE) <br> * Das ganze Dokument * <br> & FR - A - 450 032 | 7,10,11,13-15 |
| | DE - C - 242 089 (CHAMBERLIN) <br> * Das ganze Dokument * | 7,10,11,14,15 |

./.

**KLASSIFIKATION DER ANMELDUNG (Int.Cl. 3)**

C 03 B 9/02
9/08

**RECHERCHIERTE SACHGEBIETE (Int. Cl. 3)**

C 03 B 9/02
9/08

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 11-10-1979 | V.D. BOSSCHE |

EPA form 1503.1 06.78

| | EINSCHLÄGIGE DOKUMENTE | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| | FR - A - 364 946 (HARTMAN) <br> * Das ganze Dokument * <br><br> -- <br><br> US - A - 1 551 933 (CHAMBERLIN) <br> * Das ganze Dokument * <br><br> ---- | 7, 10, 11, 13- 15 <br><br><br> 7, 10, 11, 13- 15 | |
| | | | **RECHERCHIERTE SACHGEBIETE (Int. Cl. ³)** |
| | | | |